# EUROPEAN PATENT APPLICATION

(11) **EP 3 572 842 A1**
(43) Date of publication of application: **27.11.2019**
(21) Application number: 18803522.4
(22) Date of filing: 24.04.2018
(51) Int. Cl.: G01S 17/02, G01S 17/08, G01S 7/481, G01S 17/42, G02B 6/42, G02B 27/09, G02B 19/00

(54) **LASER RADAR SYSTEM AND LASER RANGING METHOD**

(30) Priority: 11.04.2018 CN 201810321882
(71) Applicant: Deepwater Optoelectronics Co., Ltd., Wuxi, Jiangu 214000 (CN)
(72) Inventor: SUN, Weiwei, Wuxi, Jiangsu 21400 (CN); WANG, Haiying, Wuxi, Jiangsu 21400 (CN)
(74) Representative: Valea AB
(86) International application number: PCT/CN2018/084241
(87) International publication number: WO 2019/196135

(57) **Abstract**

Embodiments of the present invention provide a LiDAR system and a laser ranging method. The LiDAR system includes: a laser scanning component and a rotary component; where the laser scanning component includes an emitter assembly, an emitter lens, a receiver lens and a receiver assembly. The emitter assembly includes a plurality of laser emitters and a first optical fiber array, and the receiver assembly includes a plurality of receivers and a second optical fiber array. With the LiDAR system according to the embodiments of the present invention, by using an optical fiber array as a laser emitter end of an emitter assembly, and a reflected light incident end of a receiver assembly, the size of the LiDAR may be reduced, and the production and calibration cost may be lowered.

## Description

This application claims priority to Chinese Patent Application No. 201810321882.X, filed with Chinese Patent Office on April 11, 2018 and entitled " LIGHT DETECTION AND RANGING SYSTEM AND LASER RANGING METHOD", the entire contents of which are incorporated herein by reference.

### TECHNICAL FIELD

The present invention relates to the technical field of light detection and ranging, and in particular, relates to a light detection and ranging system and a laser ranging method.

### BACKGROUND

A light detection and ranging (LiDAR) system is called as a LiDAR system. The LiDAR works based on the following principles: a laser emitter emits a laser to a target object, a receiver receives reflected light from the target object, and the LiDAR calculates a distance from the LiDAR to the target object based on the laser ranging principle. One laser emitter and one receiver form a laser ranging channel. When the laser uninterruptedly scans the target object, data of all the target points on the target object may be acquired, and a three-dimensional image of the target object may be obtained by subjecting the data to imaging.

A common three-dimensional LiDAR is a mechanically rotary LiDAR, which includes a plurality of pairs of laser emitters and receivers. Each pair of laser emitter and receiver face toward a different spatial angular position, thereby forming a sector-like coverage. Then the plurality of pairs of laser emitter and receiver are driven by a single-axis rotating mechanism to rotate as a whole, thereby implementing three-dimensional laser scanning.

Since the mechanically rotary LiDAR has a large number of laser emitters and receivers which have a big size, a great physical spacing is defined between adjacent laser ranging channels. As a result, the entire LiDAR has a big size but a low angular resolution. Further, since the laser emitter and receiver in each laser ranging channel need to be accurately calibrated to ensure that focusing is accurate, and emit and receive light axe are accurately parallel. Moreover, a tiny but accurate angular spacing needs to be ensured between adjacent laser ranging channels. Consequently, such LiDARs have a great workload in assembling and calibration and a low production efficiency, and thus the production cost is high. In addition, when the laser ranging channels are calibrated, all the laser emitters and receivers need to be fixed adhesively. Therefore, once one or several laser ranging channels are damaged, all the laser ranging channels need to be re-assembled and re-calibrated, and thus the repair cost is extremely high.

### SUMMARY

In view of above, embodiments of the present invention provide a LiDAR system. The LiDAR system includes: a laser scanning component and a rotary component; where the rotary component is configured to rotate the laser scanning component; and the laser scanning component includes: an emitter assembly, an emitter lens, a receiver assembly and a receiver lens. Further, the emitter assembly includes a plurality of laser emitters and a first optical fiber array, the plurality of laser emitters one-to-one corresponding to a plurality of optical fibers, where a laser emitted by each laser emitter enters a corresponding optical fiber, and the plurality of optical fibers corresponding to the plurality of laser emitters are connected to the first optical fiber array; the emitter lens is configured to collimate and emit lasers from the first optical fiber array. The receiver assembly includes a plurality of receivers and a second optical fiber array, the plurality of receivers one-to-one corresponding to a plurality of optical fibers, where each receiver is configured to receive reflected light transmitted via a corresponding optical fiber, and the plurality of optical fibers corresponding to the plurality of receivers are connected to the second optical fiber array; and the receiver lens is configured to receive the reflected light of the lasers, and converge the reflected light into the second optical fiber array.

Optionally, the emitter assembly further includes a first multi-core optical fiber connector, configured to connect the plurality of optical fibers corresponding to the plurality of laser emitters to the first optical fiber array; and the receiver assembly further includes a second multi-core optical fiber connector, configured to connect the plurality of optical fibers corresponding to the plurality of receivers to the second optical fiber array.

Further, the emitter assembly further includes a plurality of beam shapers, the plurality of beam shapers one-to-one corresponding to the plurality of laser emitters, and the beam shapers are configured to couple the lasers emitted by the laser emitters to the corresponding optical fibers. Optionally, the beam shaper may be a dual-cylindrical lens, generatrixes of two cylindrical surfaces of the dual-cylindrical lens being orthogonal to each other.

Alternatively, the beam shaper may be a beam shaper based on optics diffraction, and includes a collimate lens, a first diffraction element and a second diffraction element. The collimate lens is configured to collimate a beam emitted by the laser emitter in a fast axis direction to form an elongated strip-shaped beam; the first diffraction element is configured to divide the elongated strip-shaped beam into a plurality of beams, and deflect remaining beams except for a central beam towards different spatial directions; and the second diffraction element is configured to correct the remaining beams, such that the remaining beams overlap with the central beam and converge the overlapped beams to end faces of the corresponding optical fibers.

Alternatively, the beam shaper may also be another beam shaper based on optics diffraction, and includes a first lens, a first diffraction element, a second diffraction element and a second lens. The first lens is configured to collimate a beam emitted by the laser emitter in a fast axis direction to form an elongated strip-shaped beam; the first diffraction element is configured to divide the elongated strip-shaped beam into a plurality of beams, and deflect remaining beams except for a central beam towards different spatial directions; the second diffraction element is configured to correct the remaining beams, such that the remaining beams are parallel to the central beam; and the second lens is configured to overlap the remaining beams from the second diffraction element with the central beam and converge the overlapped beams to end faces of the corresponding optical fibers.

Further, the receiver assembly may further include a plurality of micro-lens, the plurality of micro-lens one-to-one corresponding to the plurality of receivers, and the micro-lens being configured to converge the reflected light transmitted via the optical fibers to the corresponding receivers.

Further, an end face of the first optical fiber array is on a focal plane of the emitter lens; an end face of the second optical fiber array is on a focal plane of the receiver lens. Optionally, the first optical fiber array may be a one-dimensional optical fiber array or a two-dimensional optical fiber array; the second optical fiber array may be a one-dimensional optical fiber array or a two-dimensional optical fiber array.

Embodiments of the present invention further provide a laser ranging method. The laser ranging method uses a LiDAR system. The LiDAR system includes a laser scanning component and a rotary component; where the laser scanning component includes an emitter assembly, an emitter lens, a receiver assembly and a receiver lens. The emitter assembly includes a plurality of laser emitters and a first optical fiber array, the plurality of laser emitters one-to-one corresponding to a plurality of optical fibers, and the plurality of optical fibers corresponding to the plurality of laser emitters being connected to the first optical fiber array. The receiver assembly includes a plurality of receivers and a second optical fiber array, the plurality of receivers one-to-one corresponding to a plurality of optical fibers, and the plurality of optical fibers corresponding to the plurality of receivers being connected to the second optical fiber array. The laser ranging method includes: rotating, by the rotary component, the laser scanning component; emitting lasers by the plurality of laser emitters, where the lasers are transmitted via the corresponding optical fibers and are emitted from the first optical fiber array; collimating and emitting, by the emitter lens, the lasers from the first optical fiber array; receiving and converging, by the receiver lens, reflected light of the lasers into the second optical fiber array; and receiving, by the plurality of receivers, the reflected light transmitted via the corresponding optical fibers.

Optionally, the emitter assembly may further include a first multi-core optical fiber connector, and the plurality of optical fibers corresponding to the plurality of laser emitters being connected to the first optical fiber array includes: the plurality of optical fibers corresponding to the plurality of laser emitters being connected to the first optical fiber array via the first multi-core optical fiber connector. The receiver assembly may further include a second multi-core optical fiber connector, and the plurality of optical fibers corresponding to the plurality of receivers being connected to the second optical fiber array includes: the plurality of optical fibers corresponding to the plurality of receivers being connected to the second optical fiber array via the second multi-core optical fiber connector.

Further, the emitter assembly further includes a plurality of beam shapers, the plurality of beam shapers one-to-one corresponding to the plurality of laser emitters, and the beam shapers being configured to couple the lasers emitted by the laser emitters to the corresponding optical fibers. Optionally, the beam shaper is a dual-cylindrical lens, generatrixes of two cylindrical surfaces of the dual-cylindrical lens being orthogonal to each other.

Alternatively, the beam shaper may also be a beam shaper based on optics diffraction. The beam shaper includes a collimate lens, a first diffraction element and a second diffraction element. The coupling, by the beam shapers, the lasers emitted by the laser emitters to the corresponding optical fibers includes: collimating, by the collimate lens, a beam emitted by the laser emitter in a fast axis direction to form an elongated strip-shaped beam; dividing, by the first diffraction element, the elongated strip-shaped beam into a plurality of beams, and deflecting remaining beams except for a central beam towards different spatial directions; and correcting, by the second diffraction element, the remaining beams, such that the remaining beams overlap with the central beam and converging the overlapped beams to end faces of the corresponding optical fibers.

Alternatively, the beam shaper may also be another beam shaper based on optics diffraction, and includes a first lens, a first diffraction element, a second diffraction element and a second lens. The coupling, by the beam shapers, the lasers emitted by the laser emitters to the corresponding optical fibers includes: collimating, by the first lens, a beam emitted by the laser emitter in a fast axis direction to form an elongated strip-shaped beam; dividing, by the first diffraction element, the elongated strip-shaped beam into a plurality of beams, and deflecting remaining beams except for a central beam towards different spatial directions; correcting, by the second diffraction element, the remaining beams, such that the remaining beams are parallel to the central beam; and overlapping, by the second lens, the remaining beams from the second diffraction element with the central beam and converging the overlapped beams to end faces of the corresponding optical fibers.

Further, the receiver assembly may further include a plurality of micro-lens, the plurality of micro-lens one-to-one corresponding to the plurality of receivers, and the micro-lens being configured to converge the reflected light transmitted via the optical fibers to the corresponding receivers.

Specifically, an end face of the first optical fiber array is on a focal plane of the emitter lens; an end face of the second optical fiber array is on a focal plane of the receiver lens. The first optical fiber array may be a one-dimensional optical fiber array or a two-dimensional optical fiber array; the second optical fiber array may be a one-dimensional optical fiber array or a two-dimensional optical fiber array.

With the LiDAR system and the laser ranging method according to embodiments of the present invention, by using an optical fiber array as a laser emitter end of an emitter assembly, and a reflected light incident end of a receiver assembly, the size of the LiDAR may be reduced, and the production and calibration cost may be lowered. In addition, in an optional embodiment, by connecting a plurality of laser emitters and a plurality of receivers to the optical fiber array via a multi-core optical fiber connector, the LiDAR may be structurally modularized, such that the maintenance cost of the LiDAR is lowered.

### BRIEF DESCRIPTION OF THE DRAWINGS

For a clearer description of the technical solutions according to the embodiments of the present invention, hereinafter brief description is given with reference to the accompanying drawings for illustrating the embodiments. Apparently, the accompanying drawings described hereinafter only illustrate some embodiments of the present invention, and other accompanying drawings may also be derived based on these accompanying drawings.
FIG. 1 is a schematic structural diagram of a LiDAR system according to an embodiment of the present invention;
FIG. 2A is a schematic structural diagram of one emitter assembly in the LiDAR system according to an embodiment of the present invention;
FIG. 2B is a schematic structural diagram of another emitter assembly in the LiDAR system according to an embodiment of the present invention;
FIG. 3 is a schematic structural view of a dual-cylindrical lens according to an embodiment of the present invention;
FIG. 4 is a schematic structural diagram of one beam shaper based on optics diffraction according to an embodiment of the present invention;
FIG. 5 is a schematic structural diagram of another beam shaper based on optics diffraction according to an embodiment of the present invention;
FIG. 6A is a schematic structural diagram of one receiver assembly in the LiDAR system according to an embodiment of the present invention;
FIG. 6B is a schematic structural diagram of another receiver assembly in the LiDAR system according to an embodiment of the present invention.

### DETAILED DESCRIPTION

The technical solutions contained in the embodiments of the present invention are described in detail clearly and completely hereinafter with reference to the accompanying drawings for the embodiments of the present invention. Apparently, the described embodiments are only a portion of embodiments of the present invention, but not all the embodiments of the present invention. Based on the embodiments hereinafter, all other embodiments derived by persons of ordinary skill in the art without any creative efforts shall fall within the protection scope of the present invention.

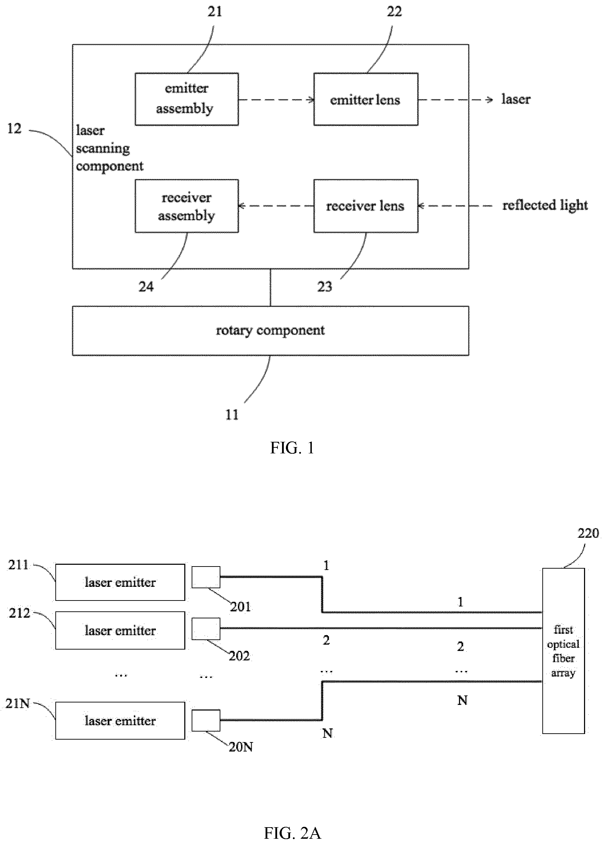

As illustrated in FIG. 1, an embodiment of the present invention provides a LiDAR system. The LiDAR system includes a rotary component 11 and a laser scanning component 12. The rotary component 11 is configured to rotate the laser scanning component 12. Specifically, the rotary component 11 may cause the laser scanning component 12 to continuously rotate by 360 degrees. The laser scanning component 12 includes an emitter assembly 21, an emitter lens 22, a receiver lens 23 and a receiver assembly 24.

Further, the emitter assembly of the laser scanning component 12 includes a plurality of laser emitters and a first optical fiber array. As illustrated in FIG. 2A, the emitter assembly according to this embodiment includes N laser emitters and a first optical fiber array 220. N is a natural number greater than or equal to 2. The N laser emitters one-to-one correspond to N optical fibers, where the laser emitted by each laser emitter enters a corresponding optical fiber and is transmitted via the optical fiber, and the N optical fibers corresponding to the N laser emitters are connected to the first optical fiber array 220. Specifically, as illustrated in FIG. 2A, a laser emitter 221, a laser emitter 212, ..., and a laser emitter 21N one-to-one correspond to an optical fiber 1, an optical fiber 2, ..., and an optical fiber N. The N optical fibers are connected to the first optical fiber array 220 to form N optical paths from the N laser emitters to the first optical fiber array 220.

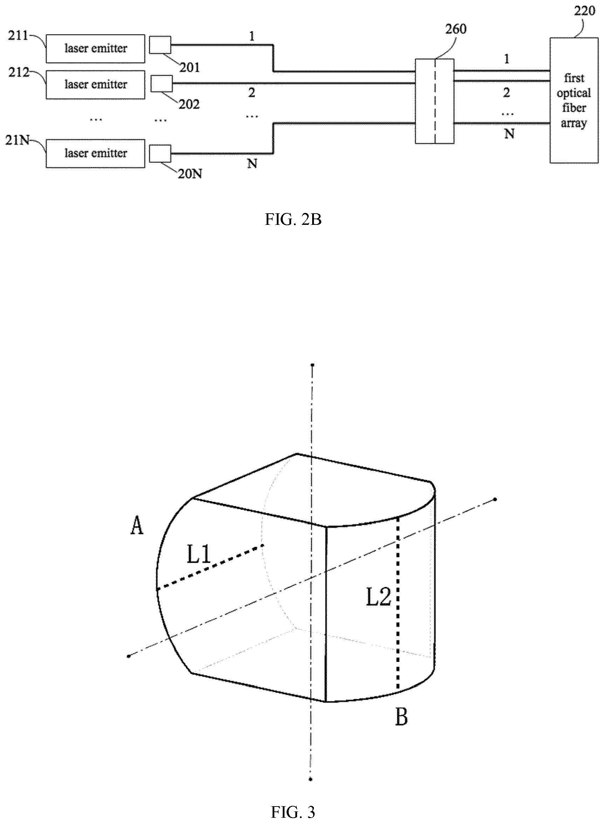

In an optional implementation solution, the emitter assembly in the above embodiment may also include a multi-core optical fiber connector, configured to connect the plurality of optical fibers corresponding to the plurality of laser emitters to the first optical fiber array. As illustrated in FIG. 2B, based on FIG. 2A, the emitter assembly further includes a first multi-core optical fiber connector 260. The first multi-core optical fiber connector 260 connects the optical fiber 1, the optical fiber 2, ..., and the optical fiber N corresponding to the laser emitter 211, the laser emitter 212, ..., and the laser emitter 21N to the first optical fiber array 220 to form the N optical paths from the N laser emitters to the first optical fiber array 220.

In the LiDAR system according to the embodiment as illustrated in FIG. 2A or FIG. 2B, N laser beams emitted by the N laser emitters of the emitter assembly reach the first optical fiber array 220 via the N optical paths, and are emitted from an end face of the first optical fiber array 220, that is, the end face of the first optical fiber array 220 serves as a laser emitter end of the emitter assembly.

In a preferred embodiment, the emitter assembly further includes a plurality of beam shapers. The plurality of beam shapers one-to-one correspond to the plurality of laser emitters, and the beam shapers are configured to couple the lasers emitted by the laser emitters to the corresponding optical fibers. As illustrated in FIG. 2A or FIG. 2B, the emitter assembly may include N beam shapers, for example, a beam shaper 201, a beam shaper 202, ..., and a beam shaper 20N, and the N beam shapers one-to-one correspond to the laser emitter 211, the laser emitter 212, ..., and the laser emitter 21N respectively, and are configured to respectively couple the lasers emitted by the N laser emitters to the corresponding N optical fibers. The beam shapers may be practiced in many ways, which is described as follows with examples.

In an optional solution, the beam shaper may be a dual-cylindrical lens as illustrated in FIG. 3. Generatrixes of two cylindrical surfaces of the dual-cylindrical lens are orthogonal to each other, that is, a generatrix L1 of a cylindrical face A of the dual-cylindrical lens is orthogonal to a generatrix L2 of a cylindrical face B of the dual-cylindrical lens.

A high powder pulse laser diode used in a multi-layer LiDAR is usually an edge emitting laser diode, whose light source is an end face of a chip P-N junction, that is, a slit at an intersection of two planes of the P-N junction. This laser emitter has the features as follows: in a direction parallel to the plane of the P-N junction, a linear dimension of the beam is greater (for example, from 50 µm to several hundreds of µm), and a radiation angle is smaller (for example, 10 degrees); and in a direction vertical to the plane of the P-N junction, the linear dimension of the beam is smaller (for example, from 1 µm to 10 µm), and the radiation angle is greater (for example, 45 degrees). The direction in which the linear dimension is greater, but the radiation angle is smaller is referred to as a slow axis; and the direction in which the linear dimension is smaller, but the radiation angle is greater is referred to as a fast axis.

According to this embodiment, two independent optical systems are respectively formed for the fast axis and the slow axis of the laser beams by using the dual-cylindrical lens as illustrated in FIG. 3. After the laser emitted by the laser emitter passes through the dual-cylindrical lens, the radiation angle in the fast axis is reduced whereas the radiation angle in the slow axis is increased, such that the beams have an equalized and close radiation angle in both the fast axis and the slow axis. Therefore, the dual-cylindrical lens according to this embodiment may shape elliptical light spots that are greatly different in two directions, the fast axis and the slow axis, into circular or square light spots that are slightly different in the fast axis direction and the slow axis direction, such that the beams are highly efficiently coupled to the optical fibers.

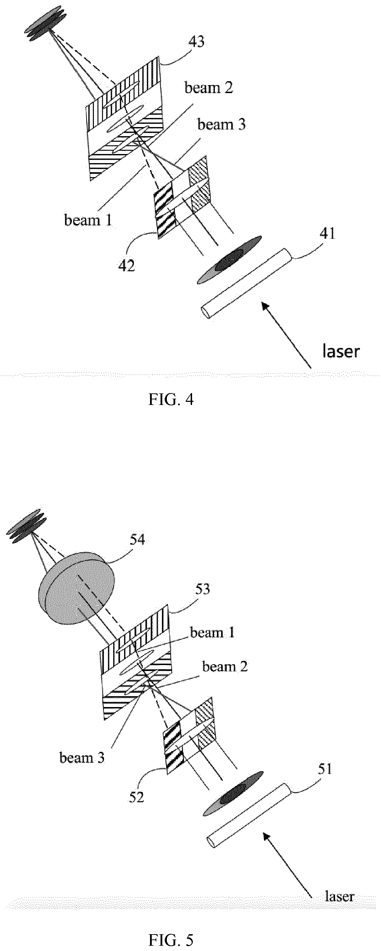

In another optional solution, the beam shaper may also be a beam shaper based on optics diffraction. As illustrated in FIG. 4, the beam shaper includes a collimate lens 41, a first diffraction element 42 and a second diffraction element 43. The collimate lens 41 is configured to collimate a beam emitted by the laser emitter in a fast axis direction to form an elongated strip-shaped beam. For example, the collimate lens 41 may be a micro cylindrical lens. The first diffraction element 42 is configured to divide the elongated strip-shaped beam into a plurality of beams and deflect remaining beams except for a central beam towards different spatial directions. The second diffraction element 43 is configured to correct the remaining beams, such that the remaining beams overlap with the central beam and converge the overlapped beams to end faces of the corresponding optical fibers.

Specifically, as illustrated in FIG. 4, the laser beams are converted into elongated strip-shaped beams through the collimate lens 41. The elongated strip-shaped beam is divided by the first diffraction element 42 into three beams: a beam 1, a beam 2 (a central beam) and a beam 3. The beam 1 is deflected downwards and rightwards; the beam 2 is the central beam and is maintained in a transmission direction parallel to a system light axis; and the beam 3 is deflected upwards and leftwards. The second diffraction element 43 corrects the beam 1 and the beam 3, such that the beam 1 and the beam 3 overlap with the central beam 2 to form square light spots with a relatively equalized linear dimension and radiation angle in a fast axis and a slow axis and to be converged to end faces of the corresponding optical fibers. The beam shaper based on optics diffraction may enable the beam to be highly efficiently coupled to the corresponding optical fiber.

In still another optional solution, the beam shaper may also be another beam shaper based on optics diffraction. As illustrated in FIG. 5, the beam shaper includes a first lens 51, a first diffraction element 52, a second diffraction element 53 and a second lens 54. The first lens 51 is configured to collimate a beam emitted by the laser emitter in a fast axis direction to form an elongated strip-shaped beam. For example, the first lens 51 may be a micro cylindrical lens. The first diffraction element 52 is configured to divide the elongated strip-shaped beam into a plurality of beams and deflect remaining beams except for a central beam towards different spatial directions. The second diffraction element 53 is configured to correct the remaining beams, such that the remaining beams are parallel to the central beam. The second lens 54 is configured to overlap the remaining beams from the second diffraction element with the central beam and converge the overlapped beams to end faces of the corresponding optical fibers.

Specifically, as illustrated in FIG. 5, the laser beams are converted into elongated strip-shaped beams through the collimate lens 51. The elongated strip-shaped beam is divided by the first diffraction element 52 into three beams: a beam 1, a beam 2 (a central beam) and a beam 3. The beam 1 is deflected downwards and rightwards; the beam 2 is the central beam and is maintained in a transmission direction parallel to a system light axis; and the beam 3 is deflected upwards and leftwards. The second diffraction element 53 corrects the beam 1 and the beam 3, such that the beam 1 and the beam 3 are parallel to the central beam 2. The second lens 54 enables the paralleled beam 1, beam 2 and beam 3 to overlap with each other to form square light spots with a relatively equalized linear dimension and radiation angle in a fast axis and a slow axis and to be converged to end faces of the corresponding optical fibers. The beam shaper based on optics diffraction may enable the beams to be highly efficiently coupled to the optical fibers.

The emitter lens 22 of the LiDAR system according to this embodiment is configured to collimate and emit lasers from the first optical fiber array 220. For example, the emitter lens 22 receives the lasers emitted by the plurality of laser emitters from the first optical fiber array 220, collimates the beams, forms a sector-like laser beam array, and irradiates the laser beams onto the target object.

Optionally, the first optical fiber array 220 may be a one-dimensional optical fiber array or a two-dimensional optical fiber array. The end face of the first optical fiber array 220 is on a focal plane of the emitter lens 22.

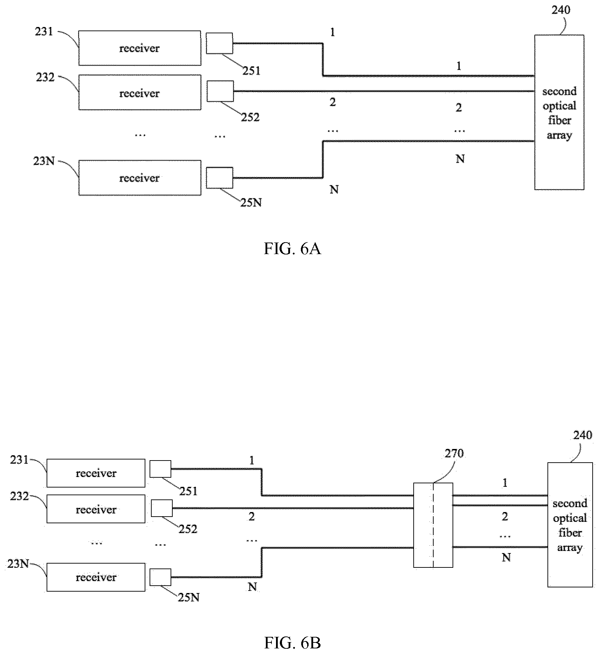

The receiver assembly of the laser scanning component 12 according to the embodiment of the present invention includes a plurality of receivers and a second optical fiber array. As illustrated in FIG. 6A, the receiver assembly according to this embodiment includes N receivers and a second optical fiber array 240. N is a natural number greater than or equal to 2. The N receivers one-to-one correspond to N optical fibers, and each receiver receives reflected light emitted a corresponding optical fiber, and the N optical fibers corresponding to the N receivers are connected to the second optical fiber array 240. Specifically, as illustrated in FIG. 6A, a receiver 231, a receiver 232, ..., and a receiver 23N one-to-one correspond to an optical fiber 1, an optical fiber 2, ..., and an optical fiber N. The N optical fibers are connected to the second optical fiber array 240 to form N optical paths from the second optical fiber array 240 to the N receivers.

In an optional implementation solution, the receiver assembly in the above embodiment may also include a multi-core optical fiber connector, configured to connect the plurality of optical fibers corresponding to the plurality of receivers to the second optical fiber array. As illustrated in FIG. 6B, based on FIG. 6A, the receiver assembly further includes a second multi-core optical fiber connector 270. The second multi-core optical fiber connector 270 connects the optical fiber 1, the optical fiber 2, ..., and the optical fiber N corresponding to the receiver 231, the receiver 232, ..., and the receiver 23N to the second optical fiber array 240 to form N optical paths from the second optical fiber array 240 to the N receivers.

In a preferred embodiment, the receiver assembly further includes a plurality of micro-lens, the plurality of micro-lens one-to-one corresponding to the plurality of receivers, and the micro-lens being configured to converge the reflected light transmitted via the optical fibers to the corresponding receivers. As illustrated in FIG. 6A or FIG. 6B, the receiver assembly includes N micro-lens, for example, a micro-lens 251, a micro-lens 252, ..., and a micro-lens 25N. The N micro-lens one-to-one correspond to the receiver 231, the receiver 232, ..., and the receiver 23N.

The receiver lens 23 according to the embodiment of the present invention is configured to receive the reflected light of the lasers and converge the reflected light into the second optical fiber array 240 as illustrated in FIG. 6A or FIG. 6B. That is, an end face of the second optical fiber array 240 serve as a laser incident end of the receiver assembly. For example, the receiver lens 23 receives light reflected by the target object, that is, the reflected light. The reflected light is reflected light of N lasers emitted by the first optical fiber array 220. The reflected light reaches the end face of the second optical fiber array 240 as illustrated in FIG. 6A or FIG. 6B after being converged by the receiver lens 23 and reaches the N receivers via the N optical paths. According to reversibility of the optical paths, after the sector-like laser beam array emitted by the emitter lens 21 is reflected by the target object, the reflected light still forms a sector-like array and reaches the receiver lens 23 and is converged, and finally the converged light enters the second optical fiber array 240.

Optionally, the second optical fiber array 240 may be a one-dimensional optical fiber array or a two-dimensional optical fiber array. The end face of the second optical fiber array 240 is on a focal plane of the receiver lens 23.

In the LiDAR system according to the embodiment of the present invention, one laser emitter corresponds to one receiver, such that a laser ranging channel is formed. Therefore, the LiDAR system according to the embodiment of the present invention includes totally N laser ranging channels.

An embodiment of the present invention further provides a laser ranging method. The laser ranging method implements laser ranging by using the LiDAR system according to the above embodiment. The specific structure and working process of the LiDAR system may be referenced to the description in the above embodiment, which are thus not described herein any further.

In the LiDAR system according to the embodiment of the present invention, the optical paths from all the laser emitters to the emitter lens and the optical paths from the receiver lens to the receivers are all implemented by thin and soft optical fibers. The outlet end of the laser and the incident end of the reflected light are both end face of optical fiber array. Therefore, as long as the optical fiber array of the emitter assembly is mounted in the focal plane of the emitter lens, and the optical fiber array of the receiver assembly is mounted on the focal plane of the receiver lens, arrangement of the laser emitters and receives may not be subject to restrictions of the emit and receive angles, and the laser emitters and receivers may be deployed at any position of the laser scanning component. In addition, since the optical fiber array has a small dimensional but a high integration, when the optical fiber array is used as the outlet end of the laser in the emitter assembly and the incident end of the laser in an incident assembly, the emitter end and the receiver end each only need a lens window having a small diameter, such that multi-layer LiDAR having tens of channels is practiced. In summary, with the technical solution according to this embodiment, the size of the mechanically rotary LiDAR may be reduced.

In another aspect, in the LiDAR system according to the embodiment of the present invention, since the optical fiber array is used as the laser outlet end of the emitter assembly and the laser incident end of the receiver assembly, relative angular positions of multiple laser ranging channels are accurately fixed. Therefore, regardless of how many laser ranging channels are provided in the LiDAR system according to this embodiment, the remaining laser ranging channels may be accurately focused and light-axis collimated only by randomly selecting any two laser ranging channels for focusing and light-axis collimation, with no need to calibrate all the laser ranging channels one by one or with no need to adjust an angular spacing between adjacent channels one by one. This improves the assembling and calibration efficiencies of the multi-layer LiDAR greatly and lowers the production cost.

Further, in the emitter assembly of the LiDAR system according to the embodiment as illustrated in FIG. 2B and the receiver assembly of the LiDAR system according to the embodiment as illustrated in FIG. 6B, the optical fibers are connected to the optical fiber array by the multi-core optical fiber connector, such that the laser emitter and the optical fiber array of the emitter assembly are modules independent of each other, the receiver and the receiver assembly are also modules independent of each other. Therefore, disassembling and repairing the laser emitter or receiver may cause no impacts onto the arrangement and position of the optical fiber array. Upon completion of the repairing, focusing and light-axis collimation of the laser ranging channels are not needed, thereby lowering the repair cost of the LiDAR.

The above embodiments and accompanying drawings are merely used to exemplarily illustrate the technical solutions of the present invention, instead of limiting the protection scope of the present invention. Any modification, equivalent replacement, or improvement made without departing from the spirit and principle of the present invention should fall within the protection scope of the present invention.

## Claims

1. A light detection and ranging, LiDAR, system, comprising: a laser scanning component and a rotary component; wherein the rotary component is configured to rotate the laser scanning component; and
the laser scanning component comprises:
an emitter assembly, comprising a plurality of laser emitters and a first optical fiber array, the plurality of laser emitters one-to-one corresponding to a plurality of optical fibers, wherein each laser emitter is configured to emit a laser, and the laser enters a corresponding optical fiber, and the plurality of optical fibers corresponding to the plurality of laser emitters are connected to the first optical fiber array;
an emitter lens, configured to collimate and emit lasers from the first optical fiber array ;
a receiver assembly, comprising a plurality of receivers and a second optical fiber array, the plurality of receivers one-to-one corresponding to a plurality of optical fibers, wherein each receiver is configured to receive reflected light transmitted via a corresponding optical fiber, and the plurality of optical fibers corresponding to the plurality of receivers are connected to the second optical fiber array; and
a receiver lens, configured to receive the reflected light of the lasers, and converge the reflected light into the second optical fiber array.

2. The LiDAR system according to claim 1, wherein
the emitter assembly further comprises a first multi-core optical fiber connector, configured to connect the plurality of optical fibers corresponding to the plurality of laser emitters to the first optical fiber array; and
the receiver assembly further comprises a second multi-core optical fiber connector, configured to connect the plurality of optical fibers corresponding to the plurality of receivers to the second optical fiber array.

3. The LiDAR system according to claim 1 or 2, wherein the emitter assembly further comprises a plurality of beam shapers, the plurality of beam shapers one-to-one corresponding to the plurality of laser emitters, and the beam shapers being configured to couple the lasers emitted by the laser emitters to the corresponding optical fibers.

4. The LiDAR system according to claim 3, wherein the beam shaper is a dual-cylindrical lens, generatrixes of two cylindrical surfaces of the dual-cylindrical lens being orthogonal to each other.

5. The LiDAR system according to claim 3, wherein the beam shaper is a beam shaper based on optics diffraction, and comprises a collimate lens, a first diffraction element and a second diffraction element; wherein
the collimate lens is configured to collimate a beam emitted by the laser emitter in a fast axis direction to form an elongated strip-shaped beam;
the first diffraction element is configured to divide the elongated strip-shaped beam into a plurality of beams, and except for a central beam, remaining beams being deflected towards different spatial directions; and
the second diffraction element is configured to correct the remaining beams, such that the remaining beams overlap with the central beam and converge the overlapped beams to end faces of the corresponding optical fibers.

6. The LiDAR system according to claim 3, wherein the beam shaper is a beam shaper based on optics diffraction, and comprises a first lens, a first diffraction element, a second diffraction element and a second lens; wherein
the first lens is configured to collimate a beam emitted by the laser emitter in a fast axis direction to form an elongated strip-shaped beam;
the first diffraction element is configured to divide the elongated strip-shaped beam into a plurality of beams, and except for a central beam, remaining beams being deflected towards different spatial directions;
the second diffraction element is configured to correct the remaining beams, such that the remaining beams are parallel to the central beam; and
the second lens is configured to overlap the remaining beams from the second diffraction element with the central beam and converge the overlapped beams to end faces of the corresponding optical fibers.

7. The LiDAR system according to claim 1 or 2, wherein the receiver assembly further comprises a plurality of micro-lens, the plurality of micro-lens one-to-one corresponding to the plurality of receivers, and the micro-lens being configured to converge the reflected light transmitted via the optical fibers to the corresponding receivers.

8. The LiDAR system according to claim 1 or 2, wherein an end face of the first optical fiber array is on a focal plane of the emitter lens; an end face of the second optical fiber array is on a focal plane of the receiver lens.

9. The LiDAR system according to claim 1 or 2, wherein the first optical fiber array is a one-dimensional optical fiber array or a two-dimensional optical fiber array; the second optical fiber array is a one-dimensional optical fiber array or a two-dimensional optical fiber array.

10. A laser ranging method, wherein a light detection and ranging, LiDAR, system is used for laser ranging, and the LiDAR system comprises a laser scanning component and a rotary component; wherein the laser scanning component comprises an emitter assembly, an emitter lens, a receiver assembly and a receiver lens; wherein the emitter assembly comprises a plurality of laser emitters and a first optical fiber array, the plurality of laser emitters one-to-one corresponding to a plurality of optical fibers, and the plurality of optical fibers corresponding to the plurality of laser emitters being connected to the first optical fiber array; and the receiver assembly comprises a plurality of receivers and a second optical fiber array, the plurality of receivers one-to-one corresponding to a plurality of optical fibers, and the plurality of optical fibers corresponding to the plurality of receivers being connected to the second optical fiber array; and
the method comprises:
rotating, by the rotary component, the laser scanning component;
emitting, by each laser emitter, a laser, wherein the laser is transmitted via the corresponding optical fibers and is emitted from the first optical fiber array;
collimating and emitting, by the emitter lens, the lasers from the first optical fiber array;
receiving and converging, by the receiver lens, reflected light of the lasers into the second optical fiber array; and
receiving, by the plurality of receivers, the reflected light via the corresponding optical fibers.

11. The laser ranging method according to claim 10, wherein
the emitter assembly further comprises a first multi-core optical fiber connector, and the plurality of optical fibers corresponding to the plurality of laser emitters being connected to the first optical fiber array comprises: the plurality of optical fibers corresponding to the plurality of laser emitters being connected to the first optical fiber array via the first multi-core optical fiber connector; and
the receiver assembly further comprises a second multi-core optical fiber connector, and the plurality of optical fibers corresponding to the plurality of receivers being connected to the second optical fiber array comprises: the plurality of optical fibers corresponding to the plurality of receivers being connected to the second optical fiber array via the second multi-core optical fiber connector.

12. The laser ranging method according to claim 10 or 11, wherein the emitter assembly further comprises a plurality of beam shapers, the plurality of beam shapers one-to-one corresponding to the plurality of laser emitters;
coupling, by the beam shapers, the lasers emitted by the laser emitters to the corresponding optical fibers.

13. The laser ranging method according to claim 12, wherein the beam shaper is a dual-cylindrical lens, generatrixes of two cylindrical surfaces of the dual-cylindrical lens being orthogonal to each other.

14. The laser ranging method according to claim 12, wherein the beam shaper is a beam shaper based on optics diffraction, and comprises a collimate lens, a first diffraction element and a second diffraction element; wherein the coupling, by the beam shapers, the lasers emitted by the laser emitters to the corresponding optical fibers comprises:
collimating, by the collimate lens, a beam emitted by the laser emitter in a fast axis direction to form an elongated strip-shaped beam;
dividing, by the first diffraction element, the elongated strip-shaped beam into a plurality of beams, and except for a central beam, remaining beams being deflected towards different spatial directions; and
correcting, by the second diffraction element, the remaining beams, such that the remaining beams overlap with the central beam and are converging the overlapped beams to end faces of the corresponding optical fibers.

15. The laser ranging method according to claim 12, wherein the beam shaper is a beam shaper based on optics diffraction, and comprises a first lens, a first diffraction element, a second diffraction element and a second lens; wherein the coupling, by the beam shapers, the lasers emitted by the laser emitters to the corresponding optical fibers comprises:
collimating, by the first lens, a beam emitted by the laser emitter in a fast axis direction to form an elongated strip-shaped beam;
dividing, by the first diffraction element, the elongated strip-shaped beam into a plurality of beams, and except for a central beam, remaining beams being deflected towards different spatial directions;
correcting, by the second diffraction element, the remaining beams, such that the remaining beams are parallel to the central beam;
overlapping, by the second lens, the remaining beams from the second diffraction element with the central beam and converging the overlapped beams to end faces of the corresponding optical fibers.

16. The laser ranging method according to claim 10 or 11, wherein the receiver assembly further comprises a plurality of micro-lens, the plurality of micro-lens one-to-one corresponding to the plurality of receivers;
converging, by the micro-lens, the reflected light transmitted via the optical fibers to the corresponding receivers.

17. The laser ranging method according to claim 10 or 11, wherein an end face of the first optical fiber array is on a focal plane of the emitter lens; an end face of the second optical fiber array is on a focal plane of the receiver lens.

18. The laser ranging method according to claim 10 or 11, wherein the first optical fiber array is a one-dimensional optical fiber array or a two-dimensional optical fiber array; the second optical fiber array is a one-dimensional optical fiber array or a two-dimensional optical fiber array.
